# EUROPÄISCHE PATENTANMELDUNG

(11) **EP 4 287 084 A1**
(43) Veröffentlichungstag der Anmeldung: **06.12.2023**
(21) Anmeldenummer: 23174957.3
(22) Anmeldetag: 23.05.2023
(51) Int. Cl.: G06N 20/00, G06F 1/3203

(54) **VERFAHREN, COMPUTERPROGRAMM UND VORRICHTUNG ZUM REDUZIEREN EINER ERFORDERLICHEN RECHENLEISTUNG EINES ALGORITHMUS DER KÜNSTLICHEN INTELLIGENZ, SOWIE FORTBEWEGUNGSMITTEL**

(30) Priorität: 02.06.2022 DE 102022205679
(71) Anmelder: VOLKSWAGEN AG, 38440 Wolfsburg (DE)
(72) Erfinder: Schöning, Volkmar, 30900 Wedemark (DE); Hüsemann, Dr. Frank, 38162 Cremlingen (DE)

(57) **Zusammenfassung**

Die vorliegende Erfindung betrifft ein Verfahren, ein Computerprogramm mit Instruktionen und eine Vorrichtung zum Reduzieren einer erforderlichen Rechenleistung eines Algorithmus der künstlichen Intelligenz. Die Erfindung betrifft weiterhin ein Fortbewegungsmittel, in dem ein erfindungsgemäßes Verfahren oder eine erfindungsgemäße Vorrichtung eingesetzt wird. In einem ersten Schritt wird eine Entscheidung parallel durch zwei Instanzen des Algorithmus berechnet (10). Dabei verarbeitet eine operative erste Instanz vollständige Eingangsinformationen, wohingegen eine nicht-operative zweite Instanz reduzierte Eingangsinformationen verarbeitet. Anschließend wird eine Güte der Entscheidung der zweiten Instanz des Algorithmus bestimmt (11). Zudem wird eine für das Berechnen der Entscheidung erforderliche Rechenleistung der zweiten Instanz des Algorithmus bestimmt (12). Wenn die Güte der Entscheidung einem Gütekriterium genügt und die erforderliche Rechenleistung der zweiten Instanz des Algorithmus reduziert ist, wird die operative erste Instanz des Algorithmus angepasst (13). Eine optimierte Instanz des Algorithmus kann als Standardroutine in einem Steuergerät abgelegt werden (14). Vorzugsweise wird diese Standardroutine im Betrieb hinsichtlich des Auftretens von Fehlern überwacht (15).

## Beschreibung

Die vorliegende Erfindung betrifft ein Verfahren, ein Computerprogramm mit Instruktionen und eine Vorrichtung zum Reduzieren einer erforderlichen Rechenleistung eines Algorithmus der künstlichen Intelligenz. Die Erfindung betrifft weiterhin ein Fortbewegungsmittel, in dem ein erfindungsgemäßes Verfahren oder eine erfindungsgemäße Vorrichtung eingesetzt wird.

Computergestützte Algorithmen der künstlichen Intelligenz benötigen sehr viel Rechenleistung, da sie eine Vielzahl von Informationen zur Entscheidungsfindung verarbeiten müssen. Eine Optimierung solcher Algorithmen in Hinblick auf eine Reduzierung der erforderlichen Rechenleistung ist wünschenswert, um die Algorithmen auch in Umgebungen mit begrenzter Rechenleistung einsetzen zu können.

Vor diesem Hintergrund beschreibt CN 113177631 A ein Verfahren zur Datensatzreduktion für das Training eines tiefen neuronalen Netzwerks. Bei dem Verfahren wird die Informationsredundanz zwischen jeweils zwei Datenwerten aus Trainingsdaten durch die Berechnung gegenseitiger Informationsindizes der Datenwerte erhalten. Die Datenwerte und die Informationsredundanz dienen dann als Knoten- und Kantengewichte eines Graphen. Unter Verwendung einer gierigen Expansion ausgehend von einem Anfangspunkt des Graphen wird schließlich ein reduzierter Datensatz gebildet.

Es ist eine Aufgabe der Erfindung, verbesserte Lösungen zum Reduzieren einer erforderlichen Rechenleistung eines Algorithmus der künstlichen Intelligenz bereitzustellen.

Diese Aufgabe wird durch ein Verfahren mit den Merkmalen des Anspruchs 1, durch ein Computerprogramm mit Instruktionen gemäß Anspruch 9, durch eine Vorrichtung mit den Merkmalen des Anspruchs 10 und durch ein Fortbewegungsmittel gemäß Anspruch 11 gelöst. Bevorzugte Ausgestaltungen der Erfindung sind Gegenstand der abhängigen Ansprüche.

Gemäß einem ersten Aspekt der Erfindung umfasst ein Verfahren zum Reduzieren einer erforderlichen Rechenleistung eines Algorithmus der künstlichen Intelligenz die Schritte:
- Berechnen einer Entscheidung parallel durch zwei Instanzen des Algorithmus, wobei eine operative erste Instanz vollständige Eingangsinformationen verarbeitet und eine nicht-operative zweite Instanz reduzierte Eingangsinformationen verarbeitet;
- Bestimmen einer Güte der Entscheidung der zweiten Instanz des Algorithmus;
- Bestimmen einer für das Berechnen der Entscheidung erforderlichen Rechenleistung der zweiten Instanz des Algorithmus; und
- Anpassen der operativen ersten Instanz des Algorithmus, wenn die Güte der Entscheidung einem Gütekriterium genügt und die erforderliche Rechenleistung der zweiten Instanz des Algorithmus reduziert ist.

Gemäß einem weiteren Aspekt der Erfindung umfasst ein Computerprogramm Instruktionen, die bei Ausführung durch einen Computer den Computer zur Ausführung der folgenden Schritte zum Reduzieren einer erforderlichen Rechenleistung eines Algorithmus der künstlichen Intelligenz veranlassen:
- Berechnen einer Entscheidung parallel durch zwei Instanzen des Algorithmus, wobei eine operative erste Instanz vollständige Eingangsinformationen verarbeitet und eine nicht-operative zweite Instanz reduzierte Eingangsinformationen verarbeitet;
- Bestimmen einer Güte der Entscheidung der zweiten Instanz des Algorithmus;
- Bestimmen einer für das Berechnen der Entscheidung erforderlichen Rechenleistung der zweiten Instanz des Algorithmus; und
- Anpassen der operativen ersten Instanz des Algorithmus, wenn die Güte der Entscheidung einem Gütekriterium genügt und die erforderliche Rechenleistung der zweiten Instanz des Algorithmus reduziert ist.

Der Begriff Computer ist dabei breit zu verstehen. Insbesondere umfasst er auch Steuergeräte, Workstations und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Reduzieren einer erforderlichen Rechenleistung eines Algorithmus der künstlichen Intelligenz auf:
- eine Steuereinheit zum Veranlassen eines Berechnens einer Entscheidung parallel durch zwei Instanzen des Algorithmus, wobei eine operative erste Instanz vollständige Eingangsinformationen verarbeitet und eine nicht-operative zweite Instanz reduzierte Eingangsinformationen verarbeitet;
- eine Auswerteeinheit zum Bestimmen einer Güte der Entscheidung der zweiten Instanz des Algorithmus und zum Bestimmen einer für das Berechnen der Entscheidung erforderlichen Rechenleistung der zweiten Instanz des Algorithmus; und
- eine Optimierungseinheit zum Anpassen der operativen ersten Instanz des Algorithmus, wenn die Güte der Entscheidung einem Gütekriterium genügt und die erforderliche Rechenleistung der zweiten Instanz des Algorithmus reduziert ist.

Bei der erfindungsgemäßen Lösung werden Algorithmen der künstlichen Intelligenz optimiert, indem gezielt Eingangsinformationen weggelassen werden, die andernfalls berücksichtigt werden müssten und damit Rechenleistung verbrauchen. Um festzustellen, welche Eingangsinformationen unberücksichtigt bleiben können, erfolgt eine parallele Verarbeitung der Eingangsinformationen auf etablierte Weise und auf veränderte Weise. Eine erste Instanz des Algorithmus, die die vollständigen Eingangsinformationen auf etablierte Weise verarbeitet, bestimmt operativ das Ergebnis, welches auch zur Anwendung kommt. Eine zweite Instanz des Algorithmus, die reduzierte Eingangsinformationen verarbeitet, berechnet das Ergebnis parallel im Hintergrund, bringt es aber nicht zur Ausführung. Dies ist z.B. wichtig bei sicherheitskritischen Verfahren. Dabei werden jedoch die Güte des Ergebnisses sowie die benötigte Rechenleistung überprüft. Auf Basis dieser Auswertung wird der operative Algorithmus gegebenenfalls angepasst bzw. optimiert. Als Algorithmen der künstlichen Intelligenz kommen beispielsweise Algorithmen in Betracht, die auf maschinellem Lernen basieren, insbesondere auf Deep Learning (deutsch: mehrschichtiges Lernen, tiefes Lernen oder tiefgehendes Lernen) basierende neuronale Netze.

Gemäß einem Aspekt der Erfindung erfolgt das Anpassen der operativen ersten Instanz des Algorithmus erst, nachdem die Güte und die erforderliche Rechenleistung für zwei oder mehr Entscheidungen bestimmt wurden. Der Ansatz, den optimierten Algorithmus erst nach mehreren erfolgreichen Überprüfungen zum operativen Algorithmus zu machen, sorgt für eine erhöhte Sicherheit, da eine vorschnelle Anpassung des operativen Algorithmus nach einer einzelnen eventuell fehlerhaften positiven Überprüfung verhindert wird.

Gemäß einem Aspekt der Erfindung werden die reduzierten Eingangsinformationen durch zufälliges Weglassen von Eingangsinformationen oder basierend auf einer Auswertung früherer Entscheidungen bestimmt. Bei einem ersten Ansatz werden zufällig bestimmte Eingangsdaten für die Entscheidungsfindung weggelassen und es wird anschließend geprüft, ob sich das Ergebnis dadurch verschlechtert. Beispielsweise fährt ein Fahrzeug auf einer Straße geradeaus und vor dem Fahrzeug befindet sich Bodenschwelle zur Verkehrsberuhigung. Der Algorithmus hält die Bodenschwelle für nicht relevant und das Fahrzeug setzt auf. In der Überprüfung wird festgestellt, dass diese Eingangsinformation sehr wohl relevant war und beim nächsten Mal berücksichtigt werden muss. In einem anderen Fall fährt das Fahrzeug auf einer Straße geradeaus und neben der Fahrbahn steht eine Mülltonne. Der Algorithmus lässt diese Eingangsinformation weg und nichts Negatives passiert. Daher kann diese Eingangsinformation auch zukünftig ausgeblendet werden. Bei einem zweiten Ansatz werden alle Arten von Eingangsinformationen betrachtet und es wird überprüft, wo unterschiedliche bzw. gegensätzliche Eingangsdaten trotzdem zum selben Ergebnis geführt haben. Diese können dann zukünftig bei der Berücksichtigung weggelassen werden. Beispielsweise fährt ein Fahrzeug auf einer Straße geradeaus. In einem ersten Fall steht rechts neben dem Fahrbahnrand eine Laterne, in einem zweiten Fall steht links neben dem Fahrbahnrand eine Sitzbank. Beides, obwohl neue, unterschiedliche Eingangsdaten, beeinflusst den Algorithmus "Vorwärtsfahren" nicht. Beim dritten Durchgang wird diese Eingangsinformation sofort ausgeblendet bzw. ausgefiltert und erfordert keine Rechenleistung mehr.

Gemäß einem Aspekt der Erfindung werden als Gütekriterium gefahrene Kilometer, eine Anzahl relevanter Szenarien, Rückmeldungen eines Nutzers, ein Energieverbrauch, ein Verschleiß oder eine Gleichmäßigkeit einer vom Algorithmus gesteuerten Funktion betrachtet. Alle diese Kriterien sind mögliche geeignete Maße für die Güte einer Entscheidung. Welches Gütekriterium bzw. welche Kombination von Gütekriterien betrachtet wird, liegt im Ermessen des Fachmanns.

Gemäß einem Aspekt der Erfindung werden als Kriterium für die erforderlichen Rechenleistung eine Prozessorlast, ein Speicherverbrauch, eine Reaktionszeit, ein Stromverbrauch oder eine Abwärme betrachtet. Alle diese Kriterien können als Maß für die Rechenleistung genutzt werden. Welches Kriterium bzw. welche Kombination von Kriterien betrachtet wird, liegt im Ermessen des Fachmanns. Insbesondere kann dabei berücksichtigt werden, welche Kriterien zu erfüllenden Randbedingungen unterliegen, z.B. Vorgaben hinsichtlich eines maximal zur Verfügung stehenden Speichers.

Gemäß einem Aspekt der Erfindung wird eine optimierte Instanz des Algorithmus als Standardroutine in einem Steuergerät abgelegt. Wenn sich über mehrere Optimierungszyklen die Eingangsinformationen nicht weiter reduzieren lassen, ist eine Standardroutine etabliert. Diese kommt mit minimaler Eingangsinformation und minimalem Rechenaufwand ebenfalls zu einem guten Ergebnis. Indem wiederkehrende Algorithmen in Standardroutinen umgewandelt werden, die in anderen Speicherarealen laufen, wird Rechenleistung frei.

Gemäß einem Aspekt der Erfindung wird die Standardroutine im Betrieb hinsichtlich des Auftretens von Fehlern überwacht. Bei Anwendung der Standardroutine kann die Situation auftreten, dass einmal nicht das gewünschte Ergebnis erzielt wird, weil z.B. eine bisher unbekannte Eingangsgröße Einfluss nimmt. In diesem Fall sollte die Standardroutine entsprechend modifiziert werden, bis sie wieder ohne Fehler funktioniert und als erweiterte Standardroutine abgelegt werden kann.

Gemäß einem Aspekt der Erfindung implementiert der Algorithmus der künstlichen Intelligenz eine automatisierte oder assistierte Fahrfunktion eines Fortbewegungsmittels. Da derartige Fahrfunktionen oftmals komplexe Eingangsinformationen verarbeiten müssen, sind sie prädestiniert für die Nutzung von Algorithmen der künstlichen Intelligenz. Durch die erfindungsgemäße Reduzierung der erforderlichen Rechenleistung wird dabei erreicht, dass die erforderlichen Algorithmen auch in Fortbewegungsmitteln mit begrenzter Rechenleistung eingesetzt werden können.

Besonders vorteilhaft wird ein erfindungsgemäßes Verfahren oder eine erfindungsgemäße Vorrichtung in einem Fortbewegungsmittel eingesetzt. Bei dem Fortbewegungsmittel kann es sich insbesondere um ein Kraftfahrzeug handeln, z.B. einen Personenkraftwagen oder ein Nutzfahrzeug. Die Nutzung der erfindungsgemäßen Lösung hat dabei den Vorteil, dass die Rechenleistung, die vom Fortbewegungsmittel zur Verfügung gestellt werden muss, reduziert ist. Dies senkt die Kosten für die Umsetzung der Algorithmen der künstlichen Intelligenz im Fortbewegungsmittel.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Reduzieren einer erforderlichen Rechenleistung eines Algorithmus der künstlichen Intelligenz;
- Fig. 2: zeigt eine erste Ausführungsform einer Vorrichtung zum Reduzieren einer erforderlichen Rechenleistung eines Algorithmus der künstlichen Intelligenz;
- Fig. 3: zeigt eine zweite Ausführungsform einer Vorrichtung zum Reduzieren einer erforderlichen Rechenleistung eines Algorithmus der künstlichen Intelligenz;
- Fig. 4: stellt schematisch ein Fortbewegungsmittel dar, in dem eine erfindungsgemäße Lösung realisiert ist;
- Fig. 5: zeigt schematisch das Anlernen eines Algorithmus der künstlichen Intelligenz; und
- Fig. 6: zeigt schematisch das Optimieren eines zuvor angelernten Algorithmus der künstlichen Intelligenz.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

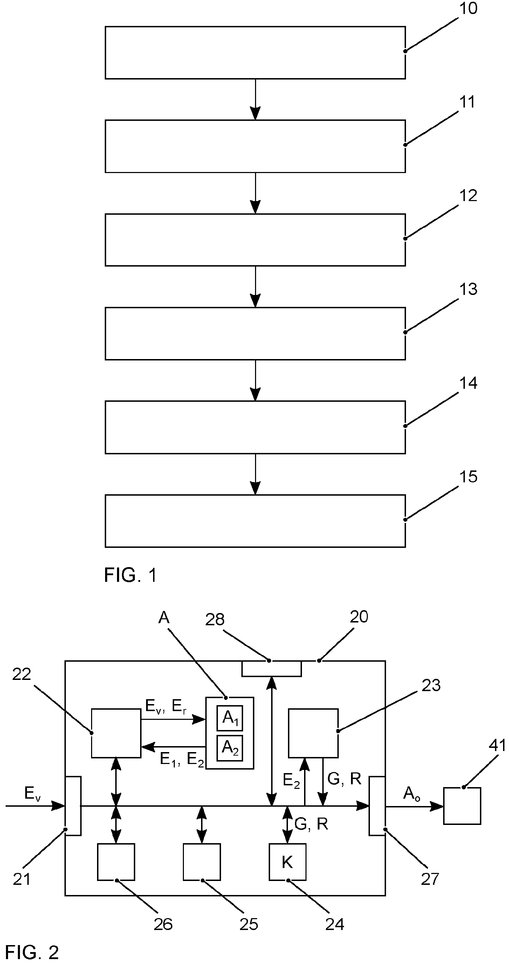

Fig. 1 zeigt schematisch ein Verfahren zum Reduzieren einer erforderlichen Rechenleistung eines Algorithmus der künstlichen Intelligenz. Beispielsweise kann der der Algorithmus eine automatisierte oder assistierte Fahrfunktion eines Fortbewegungsmittels implementieren. In einem ersten Schritt wird eine Entscheidung parallel durch zwei Instanzen des Algorithmus berechnet 10. Dabei verarbeitet eine operative erste Instanz vollständige Eingangsinformationen, wohingegen eine nicht-operative zweite Instanz reduzierte Eingangsinformationen verarbeitet. Die reduzierten Eingangsinformationen können beispielsweise durch zufälliges Weglassen von Eingangsinformationen oder basierend auf einer Auswertung früherer Entscheidungen bestimmt werden. Anschließend wird eine Güte der Entscheidung der zweiten Instanz des Algorithmus bestimmt 11. Zudem wird eine für das Berechnen der Entscheidung erforderliche Rechenleistung der zweiten Instanz des Algorithmus bestimmt 12. Wenn die Güte der Entscheidung einem Gütekriterium genügt und die erforderliche Rechenleistung der zweiten Instanz des Algorithmus reduziert ist, wird die operative erste Instanz des Algorithmus angepasst 13. Dabei kann vorgesehen sein, dass das Anpassen 13 der operativen ersten Instanz des Algorithmus erst erfolgt, nachdem die Güte und die erforderliche Rechenleistung für zwei oder mehr Entscheidungen bestimmt wurde 11, 12. Als Gütekriterium können beispielsweise gefahrene Kilometer, eine Anzahl relevanter Szenarien, Rückmeldungen eines Nutzers, ein Energieverbrauch, ein Verschleiß oder eine Gleichmäßigkeit einer vom Algorithmus gesteuerten Funktion betrachtet werden. Als Kriterium für die erforderlichen Rechenleistung können insbesondere eine Prozessorlast, ein Speicherverbrauch, eine Reaktionszeit, ein Stromverbrauch oder eine Abwärme betrachtet werden. Wenn sich über mehrere Zyklen die Eingangsdaten nicht weiter reduzieren lassen, ist eine Standardroutine etabliert. Eine optimierte Instanz des Algorithmus kann dann als Standardroutine in einem Steuergerät abgelegt werden 14. Vorzugsweise wird die Standardroutine im Betrieb hinsichtlich des Auftretens von Fehlern überwacht 15.

Fig. 2 zeigt eine vereinfachte schematische Darstellung einer ersten Ausführungsform einer Vorrichtung 20 zum Reduzieren einer erforderlichen Rechenleistung eines Algorithmus A der künstlichen Intelligenz. Beispielsweise kann der der Algorithmus A eine automatisierte oder assistierte Fahrfunktion eines Fortbewegungsmittels implementieren. Die Vorrichtung 20 hat einen Eingang 21, über den Informationen empfangen werden können, z.B. Eingangsinformationen Eᵥ für die Verarbeitung durch den Algorithmus A. Eine Steuereinheit 22 ist eingerichtet, das Berechnen einer Entscheidung E₁, E₂ parallel durch zwei Instanzen A_{1,} A₂ des Algorithmus A zu veranlassen. Eine operative erste Instanz A₁ verarbeitet dabei die vollständigen Eingangsinformationen Eᵥ, wohingegen eine nicht-operative zweite Instanz A₂ reduzierte Eingangsinformationen Eᵣ verarbeitet. Die reduzierten Eingangsinformationen Eᵣ können beispielsweise durch zufälliges Weglassen von Eingangsinformationen oder basierend auf einer Auswertung früherer Entscheidungen bestimmt werden. Eine Auswerteeinheit 23 ist eingerichtet, eine Güte G der Entscheidung E₂ der zweiten Instanz A₂ des Algorithmus A sowie eine für das Berechnen der Entscheidung E₂ erforderliche Rechenleistung R der zweiten Instanz A₂ des Algorithmus A zu bestimmen. Eine Optimierungseinheit 24 ist eingerichtet, die operative erste Instanz A₁ des Algorithmus A anzupassen, wenn die Güte G der Entscheidung E₂ einem Gütekriterium K genügt und die erforderliche Rechenleistung R der zweiten Instanz A₂ des Algorithmus A reduziert ist. Dabei kann vorgesehen sein, dass das Anpassen der operativen ersten Instanz A₁ des Algorithmus A erst erfolgt, nachdem die Güte G und die erforderliche Rechenleistung R für zwei oder mehr Entscheidungen E₂ bestimmt wurden. Als Gütekriterium K können beispielsweise gefahrene Kilometer, eine Anzahl relevanter Szenarien, Rückmeldungen eines Nutzers, ein Energieverbrauch, ein Verschleiß oder eine Gleichmäßigkeit einer vom Algorithmus A gesteuerten Funktion betrachtet werden. Als Kriterium für die erforderlichen Rechenleistung R können insbesondere eine Prozessorlast, ein Speicherverbrauch, eine Reaktionszeit, ein Stromverbrauch oder eine Abwärme betrachtet werden. Wenn sich über mehrere Zyklen die Eingangsdaten Eᵣ nicht weiter reduzieren lassen, ist eine Standardroutine etabliert. Eine optimierte Instanz A, des Algorithmus A kann dann als Standardroutine in einem Steuergerät 41 abgelegt werden. Zu diesem Zweck kann die optimierte Instanz Aₒ über einen Ausgang 27 der Vorrichtung 20 an das Steuergerät 41 ausgegeben werden. Vorzugsweise wird die Standardroutine im Betrieb hinsichtlich des Auftretens von Fehlern überwacht.

Die Steuereinheit 22, die Auswerteeinheit 23 und die Optimierungseinheit 24 können von einer Kontrolleinheit 25 gesteuert werden. Über eine Benutzerschnittstelle 28 können gegebenenfalls Einstellungen der Steuereinheit 22, der Auswerteeinheit 23, der Optimierungseinheit 24 oder der Kontrolleinheit 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Die Steuereinheit 22, die Auswerteeinheit 23, die Optimierungseinheit 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

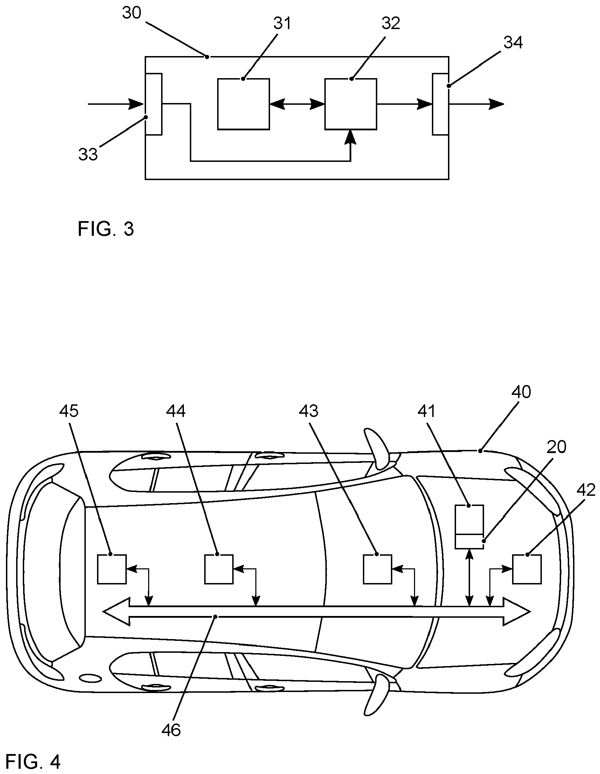

Fig. 3 zeigt eine vereinfachte schematische Darstellung einer zweiten Ausführungsform einer Vorrichtung zum Reduzieren einer erforderlichen Rechenleistung eines Algorithmus der künstlichen Intelligenz. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Eingangsinformationen für die Verarbeitung durch den Algorithmus. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist zumindest ein Steuergerät 41 auf, das beispielsweise eine automatisierte oder assistierte Fahrfunktion steuert. Auf dem Steuergerät 41 läuft eine Standardroutine, die in Form einer optimierten Instanz eines Algorithmus der künstlichen Intelligenz von einer erfindungsgemäßen Vorrichtung 20 bereitgestellt wurde. Sowohl das Steuergerät 41 als auch die Vorrichtung 20 verarbeiten Eingangsinformationen, die beispielsweise von einer Umgebungssensorik 42 bereitgestellt werden. Die Umgebungssensorik 42 kann z.B. Kameras, Radarsensoren, Lidarsensoren oder Ultraschallsensoren umfassen. Weitere Komponenten des Kraftfahrzeugs sind ein Navigationssystem 43 sowie eine Datenübertragungseinheit 44. Mittels der Datenübertragungseinheit 44 kann beispielsweise eine Verbindung zu einem Backend aufgebaut werden, z.B. zum Austausch von Informationen zur optimierten Instanz des Algorithmus oder zum Abrufen aktualisierter Software für die Komponenten des Kraftfahrzeugs. Zur Speicherung von Daten ist ein Speicher 45 vorhanden. Der Datenaustausch zwischen den verschiedenen Komponenten des Kraftfahrzeugs erfolgt über ein Netzwerk 46.

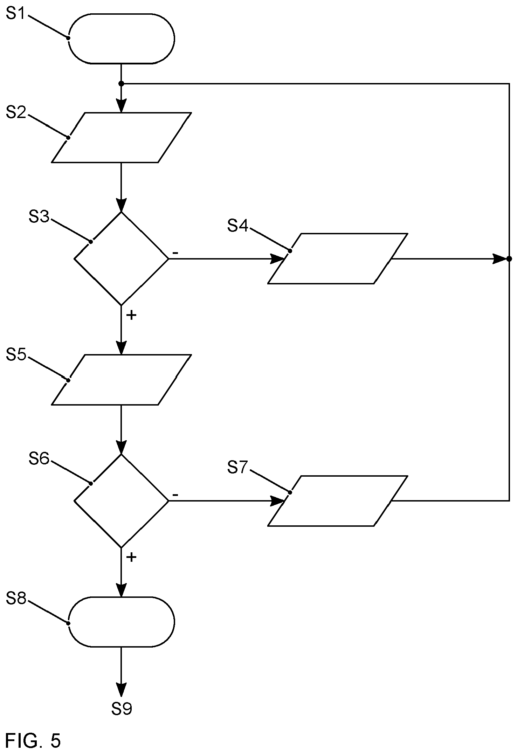

Fig. 5 zeigt schematisch das Anlernen eines Algorithmus der künstlichen Intelligenz. In diesem Beispiel kommen beim Anlernen mehrere künstliche Intelligenzen (KI) zum Einsatz, d.h. ein Ausführer, zumindest ein Entwickler sowie ein Schiedsrichter. Die Rolle "Ausführer" hat die Kl, die momentan auf Basis der gelernten Algorithmen das zu steuernde System und seine Funktionen steuert. Die Rolle "Entwickler" hat eine Kl, die den Ausführer, das System, die Umgebung und, falls es sich bei dem System um ein Fortbewegungsmittel handelt, die Insassen beobachtet und Algorithmen weiterentwickelt. Diese Rolle kann mehrfach existieren. Die Rolle "Schiedsrichter" hat die Kl, die die Lösungsvorschläge des zumindest einen Entwicklers beurteilt und vergleicht und die optimale Lösung auswählt. In einem ersten Schritt S1 beginnt der Prozess des Anlernens. Zunächst erfolgt eine Datenerhebung S2 zum Deep Learning der Entwickler. Wenn eine nachfolgende Überprüfung S3 ergibt, dass nichts Neues erlernt wurde, erfolgt eine Aktualisierung S4 des zumindest einen Entwicklers und der Prozess kehrt zurück zur Datenerhebung S2. Ergibt die Überprüfung S3 hingegen, dass etwas Neues erlernt wurde, erfolgt ein Vergleich S5 des zumindest einen Entwicklers zum Ausführer durch den Schiedsrichter. Dazu wird überprüft S6, ob der aktuelle zumindest eine Entwickler nach vorgegebenen Gütekriterien besser ist als die vorherige Version. Wenn dies nicht der Fall ist, erfolgt eine Korrektur bzw. Aktualisierung S7 des zumindest einen Entwicklers und der Prozess kehrt zurück zur Datenerhebung S2. Wenn hingegen bei der Überprüfung S6 eine Verbesserung festgestellt wurde, erfolgt eine Freigabe S8 der gelernten Funktion.

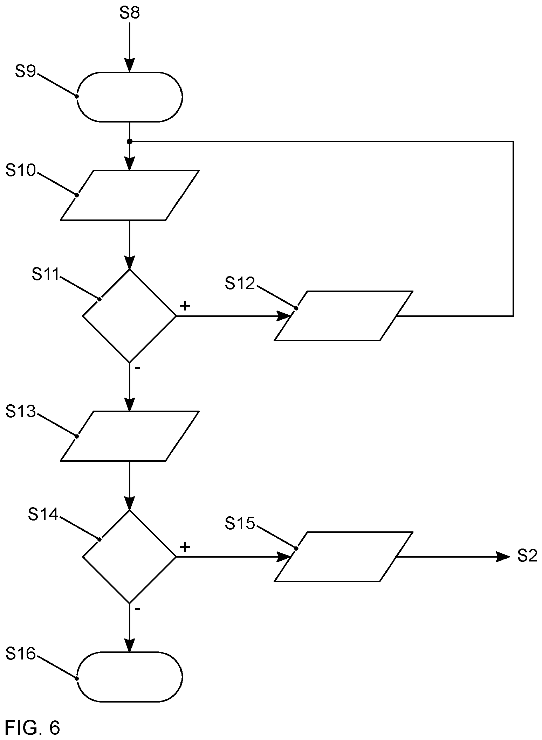

Fig. 6 zeigt schematisch das Optimieren eines zuvor angelernten Algorithmus der künstlichen Intelligenz. In einem ersten Schritt S9 beginnt der Prozess des Optimierens. Dazu erfolgt eine parallele Verarbeitung S10 der Eingangsinformationen durch zwei Instanzen des Algorithmus. Die erste Instanz verarbeitet vollständige Eingangsinformationen und bestimmt operativ das Ergebnis, welches auch zur Anwendung kommt. Die zweite Instanz des Algorithmus verarbeitet parallel im Hintergrund reduzierte Eingangsinformationen, bei denen gezielt Eingangsinformationen weggelassen wurden. Die reduzierten Eingangsinformationen können beispielsweise durch zufälliges Weglassen von Eingangsinformationen oder basierend auf einer Auswertung früherer Entscheidungen bestimmt werden. Die Entscheidung der zweiten Instanz wird nicht zur Ausführung gebracht. Allerdings wird anhand der Güte der Entscheidung und der verbrauchten Rechenleistung überprüft S11, ob es eine Verbesserung hinsichtlich der erforderlichen Rechenleistung unter Berücksichtigung der betrachteten Gütekriterien gab. Wenn dies der Fall ist, wird eine weitere Optimierungsschleife gestartet S12 und das Verfahren kehrt zurück zum Schritt S10. Wenn es allerdings keine weitere Verbesserung gab, ist eine Standardroutine etabliert, die als Code in einem Steuergerät abgelegt wird S13. Diese kommt mit minimaler Eingangsinformation und minimalem Rechenaufwand zum gewünschten Ergebnis. Gegebenenfalls erfolgt die Ablage als Standardroutine erst dann, wenn sich über mehrere Zyklen keine weiteren Eingangsdaten mehr reduzieren lassen. Sollte bei Anwendung der Standardroutine zu einem späteren Zeitpunkt festgestellt werden S14, dass ein Fehler auftritt und nicht das gewünschte Ergebnis geliefert wird, weil z.B. eine bisher unbekannte Eingangsgröße Einfluss nimmt, so wird die Routine vorzugsweise entsprechend modifiziert, bis sie wieder ohne Fehler funktioniert und als erweiterte Standardroutine abgelegt werden kann. Dazu wird ein erneutes Anlernen gestartet S15 und das Verfahren kehrt zurück zum Schritt S2 in Fig. 5. Andernfalls bleibt die bestehende Freigabe der Standardroutine gültig S16.

### Bezugszeichenliste

- 10: Berechnen einer Entscheidung parallel durch zwei Instanzen des Algorithmus
- 11: Bestimmen einer Güte der Entscheidung der zweiten Instanz des Algorithmus
- 12: Bestimmen einer für das Berechnen erforderlichen Rechenleistung
- 13: Anpassen der operativen ersten Instanz
- 14: Ablegen einer optimierten Instanz als Standardroutine
- 15: Überwachen der Standardroutine auf Fehler
- 20: Vorrichtung
- 21: Eingang
- 22: Steuereinheit
- 23: Auswerteeinheit
- 24: Optimierungseinheit
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Fortbewegungsmittel
- 41: Steuergerät
- 42: Umgebungssensorik
- 43: Navigationssystem
- 44: Datenübertragungseinheit
- 45: Speicher
- 46: Netzwerk
- A: Algorithmus der künstlichen Intelligenz
- A₁: Erste Instanz des Algorithmus
- A₂: Zweite Instanz des Algorithmus
- A,: Optimierte Instanz
- E,: Entscheidung der ersten Instanz
- E₂: Entscheidung der zweiten Instanz
- Eᵣ: Reduzierte Eingangsinformationen
- Eᵥ: Vollständige Eingangsinformationen
- G: Güte
- K: Gütekriterium
- R: Erforderliche Rechenleistung
- S1-S16: Verfahrensschritte

## Patentansprüche

1. Verfahren zum Reduzieren einer erforderlichen Rechenleistung eines Algorithmus (A) der künstlichen Intelligenz, mit den Schritten:
- Berechnen (10) einer Entscheidung (E₁, E₂) parallel durch zwei Instanzen (A_{1,} A₂) des Algorithmus (A), wobei eine operative erste Instanz (A₁) vollständige Eingangsinformationen (Eᵥ) verarbeitet und eine nicht-operative zweite Instanz (A₂) reduzierte Eingangsinformationen (Eᵣ) verarbeitet;
- Bestimmen (11) einer Güte (G) der Entscheidung (E₂) der zweiten Instanz (A₂) des Algorithmus (A);
- Bestimmen (12) einer für das Berechnen der Entscheidung (E₂) erforderlichen Rechenleistung (R) der zweiten Instanz (A₂) des Algorithmus (A); und
- Anpassen (13) der operativen ersten Instanz (A₁) des Algorithmus (A), wenn die Güte (G) der Entscheidung (E₂) einem Gütekriterium (K) genügt und die erforderliche Rechenleistung (R) der zweiten Instanz (A₂) des Algorithmus (A) reduziert ist.

2. Verfahren gemäß Anspruch 1, wobei das Anpassen (13) der operativen ersten Instanz (A₁) des Algorithmus (A) erst erfolgt, nachdem die Güte (G) und die erforderliche Rechenleistung (R) für zwei oder mehr Entscheidungen (E₂) bestimmt wurden (11, 12).

3. Verfahren gemäß Anspruch 1 oder 2, wobei die reduzierten Eingangsinformationen (Eᵣ) durch zufälliges Weglassen von Eingangsinformationen oder basierend auf einer Auswertung früherer Entscheidungen (E₁) bestimmt werden.

4. Verfahren gemäß einem der vorherigen Ansprüche, wobei als Gütekriterium (K) gefahrene Kilometer, eine Anzahl relevanter Szenarien, Rückmeldungen eines Nutzers, ein Energieverbrauch, ein Verschleiß oder eine Gleichmäßigkeit einer vom Algorithmus gesteuerten Funktion betrachtet werden.

5. Verfahren gemäß einem der vorherigen Ansprüche, wobei als Kriterium für die erforderlichen Rechenleistung (R) eine Prozessorlast, ein Speicherverbrauch, eine Reaktionszeit, ein Stromverbrauch oder eine Abwärme betrachtet werden.

6. Verfahren gemäß einem der vorherigen Ansprüche, wobei eine optimierte Instanz (Aₒ) des Algorithmus (A) als Standardroutine in einem Steuergerät (41) abgelegt wird (14).

7. Verfahren gemäß Anspruch 6, wobei die Standardroutine im Betrieb hinsichtlich des Auftretens von Fehlern überwacht wird (15).

8. Verfahren gemäß einem der vorherigen Ansprüche, wobei der Algorithmus (A) der künstlichen Intelligenz eine automatisierte oder assistierte Fahrfunktion eines Fortbewegungsmittels (40) implementiert.

9. Computerprogramm mit Instruktionen, die bei Ausführung durch einen Computer den Computer zur Ausführung der Schritte eines Verfahrens gemäß einem der Ansprüche 1 bis 8 zum Reduzieren einer erforderlichen Rechenleistung eines Algorithmus (A) der künstlichen Intelligenz veranlassen.

10. Vorrichtung (20) zum Reduzieren einer erforderlichen Rechenleistung eines Algorithmus (A) der künstlichen Intelligenz, mit:
- einer Steuereinheit (22) zum Veranlassen eines Berechnens (10) einer Entscheidung (E₁, E₂) parallel durch zwei Instanzen (A_{1,} A₂) des Algorithmus (A), wobei eine operative erste Instanz (A₁) vollständige Eingangsinformationen (Eᵥ) verarbeitet und eine nicht-operative zweite Instanz (A₂) reduzierte Eingangsinformationen (Eᵣ) verarbeitet;
- einer Auswerteeinheit (23) zum Bestimmen (11) einer Güte (G) der Entscheidung (E₂) der zweiten Instanz (A₂) des Algorithmus (A) und zum Bestimmen (12) einer für das Berechnen der Entscheidung (E₂) erforderlichen Rechenleistung (R) der zweiten Instanz (A₂) des Algorithmus (A); und
- einer Optimierungseinheit (24) zum Anpassen (13) der operativen ersten Instanz (A₁) des Algorithmus (A), wenn die Güte (G) der Entscheidung (E₂) einem Gütekriterium (K) genügt und die erforderliche Rechenleistung (R) der zweiten Instanz (A₂) des Algorithmus (A) reduziert ist.

11. Fortbewegungsmittel (40), **dadurch gekennzeichnet, dass** das Fortbewegungsmittel (40) eine Vorrichtung (20) gemäß Anspruch 10 aufweist oder eingerichtet ist, ein Verfahren gemäß einem der Ansprüche 1 bis 8 zum Reduzieren einer erforderlichen Rechenleistung eines Algorithmus (A) der künstlichen Intelligenz auszuführen.
